# EUROPÄISCHE PATENTSCHRIFT

(11) **EP 1 536 157 B1**
(45) Veröffentlichungstag und Bekanntmachung des Hinweises auf die Patenterteilung: **15.03.2017**
(21) Anmeldenummer: 04026540.7
(22) Anmeldetag: 09.11.2004
(51) Int. Cl.: F16G 11/00, D04G 1/00

(54) **Seilverbinder**
Cable connector
Dispositif de jonction de câble

(30) Priorität: 29.11.2003 DE 10355938
(43) Veröffentlichungstag der Anmeldung: 01.06.2005
(73) Patentinhaber: Carl Stahl ARC GmbH, 73079 Süßen (DE)
(72) Erfinder: Schwenger, Willy, 73079 Süssen (DE)
(74) Vertreter: Bartels & Partner

(56) Entgegenhaltungen:
- DE-A1- 19 934 240
- DE-C- 921 656
- DE-C1- 4 100 944
- FR-A- 2 784 729
- US-A- 2 521 192
- US-A- 2 796 648
- US-A- 2 817 263
- US-A- 4 771 516
- US-A- 5 185 908
- US-A- 5 345 656

## Beschreibung

Die Erfindung betrifft einen Seilverbinder zur Verbindung von einander nicht überkreuzenden Seilabschnitten mindestens eines Seils gemäß der Merkmalsausgestaltung des Oberbegriffes des Patentanspruches 1.

Durch die DE 41 00 944 C1 ist ein Sitzmöbel mit einer aus flexiblen Seilabschnitten gebildeten Bespannung mindestens eines Trägers zur Bildung der Anlagefläche im Bereich der Rückenlehne und/oder der Sitzfläche im Bereich des Sitzteils bekannt, wobei unmittelbar benachbarte Seilabschnitte in ihrer Längsrichtung im Abstand voneinander unter Bildung einer flächigen Netzanordnung mit rautenförmigen Maschen miteinander verbunden sind. Die dahingehenden Seilabschnitte sind aus Drahtseilen oder metallischen Litzen gebildet, und zur unlösbaren Verbindung der einander nicht überkreuzenden Seilabschnitte dienen an den Verbindungs- oder Knotenstellen durch äußere Krafteinwirkung verpreßbare hülsenartige Verbindungsteile, insbesondere in Form von Preßhülsen oder Preßklemmen. Die dahingehenden Preßhülsen oder Preßklemmen bilden in sich seitlich geschlossene Verbindungsteile aus, die an ihren Stirnseiten freie Öffnungsquerschnitte aufweisen zum Einbringen oder Einfädeln der miteinander zu verbindenden Seilabschnitte der Bespannungs-Netzanordnung. Vor dem Verpreßen der hülsenartigen Verbindungsteile sind diese also innerhalb der Netzanordnung an ihrer jeweiligen Verbindungsposition teilweise über die gesamte Länge des Netzes zu führen und zu positionieren, um dann anschließend mit einem geeigneten Preßwerkzeug die zur Verbindung miteinander paarweise angeordneten Seilabschnitte kraftbündig zu verbinden. Obwohl sich dergestalt mit der bekannten Lösung sehr hohe Klemm- und Verbindungskräfte aufbringen lassen, ist diese Verbindungstechnik durch die Führung des Seilverbinders über lange Wegstrecken bis zur Positionierung unter dem Presswerkzeug nur mit sehr hohem Aufwand zu rationalisieren und die maximal zu fertigenden Netzlängen sind begrenzt.

Um diesen Nachteilen zu begegnen, schlägt die DE 199 34 240 A1 einen Seilverbinder zur unlösbaren Verbindung von einander nicht überkreuzenden Seilabschnitten vor, der ein erstes Bauteil und ein zur unlösbaren Verbindung mit dem ersten Bauteil ausgebildetes zweites Bauteil aufweist, wobei die beiden genannten Bauteile nach Art einer Nietverbindung derart miteinander verbindbar und an die Seilabschnitte angepaßt sind, dass die aufzunehmenden und festzulegenden benachbarten Seilabschnitte klemmend in Ausnehmungen am Seilverbinder festgelegt sind. Aufgrund des grundsätzlichen Aufbaues des Seilverbinders aus zwei Komponenten oder Bauteilen, die erst mittels einer Nietverbindung miteinander zu verbinden sind, ist gleichfalls ein automatisierter Ablauf für die Netzerstellung erschwert; insbesondere müssen die miteinander zu verbindenden Bauteile des Seilverbinders, die voneinander konstruktiv verschieden sind paarweise zum jeweils zu erstellenden Knotenverbindungspunkt erst sinnfällig zusammengeführt werden. Dies führt gleichfalls zu erhöhten Herstellkosten für die Herstellung von Netzen aus Seilabschnitten.

Durch die US-A-2 521 192 ist ein Seilverbinder (Fig. 16) bekannt zur Verbindung von einander nicht überkreuzenden Seilabschnitten mindestens eines Seiles, die mittels im festgelegten Montagezustand seitlich geschlossenen, hülsenartigen Verbindungsteilen miteinander verbindbar sind, wobei das jeweilige Verbindungsteil im Ausgangszustand vor Montage aus zwei Grundkörperteilen besteht, die zum Einlegen der miteinander verbindbaren Seilabschnitte seitliche Einlegeöffnungen aufweisen, wobei an jedem Ende des jeweiligen Grundkörperteils ein Verbindungsmittel vorgesehen ist und wobei im festgelegten Montagezustand die Verbindungsmittel der jeweils eingesetzten Grundkörperteile miteinander in Verbindung sind.

Weitere Seilverbinder sind durch die Entgegenhaltungen DE 921 656 C, US-A-4 771 516 und US-A-2 817 263 bekannt. Sofern es sich nicht, wie eingangs beschrieben, um einfach geschlitzte (DE 41 00 944 C) oder geschlossene (US-A-2 817 263) Preßhülsenlösungen zur Verbindung von Seilabschnitten miteinander handelt, sind die sonst erwähnten Seilverbinderlösungen nach dem Stand der Technik grundsätzlich aus zwei Grundköperteilen aufgebaut, wobei die Grundkörperteile zu ihren freien Enden hin mit den rastenden Verbindungsmitteln versehen sind, die dergestalt jeweils eine Klippverbindung im verrasteten Zustand bilden. Die angesprochene Mehrteiligkeit der bekannten Verbinder führt zu erhöhten Herstell- und Montagekosten.

Durch die FR-A- 2 784 729 ist ein gattungsgemäßer Seilverbinder zur Verbindung von einander nicht überkreuzenden Seilabschnitten mindestens eines Seils bekannt, insbesondere zur Bildung von Verbindungsstellen einer flächig ausdehnbaren, flexiblen Netzanordnung mit an Verbindungsstellen miteinander verbundenen Seilabschnitten, die mittels im festgelegten Montagezustand seitlich geschlossenen, hülsenartigen Verbindungsteilen miteinander verbindbar sind, wobei das jeweilige Verbindungsteil im Ausgangzustand vor Montage und im festgelegten Montagezustand aus einem Grundkörperteil besteht, das zum Einlegen der miteinander verbindbaren Seilabschnitte eine seitliche Einlegeöffnung aufweist.

Bei der bekannten Lösung ist das jeweils eine freie Ende des Grundkörperteils schräg abgekröpft, so dass an den beiden Enden jeweils zueinander korrespondierende rinnenartige Rastvorsprünge entstehen, die unter Schließen des klemmenartigen Seilverbinders miteinander verrastbar oder verclipbar sind, wobei dann entlang der linienartigen Verbindungsstelle des Grundkörperteils ein durchgehend leistenartiger Vorsprung gebildet ist, und wobei dann von außen her die dahingehende Rast- oder Clipsverbindung sich auch ungewollt wieder lösen kann, und dann den Seilverbinder frei gibt. Auch ist die bekannte Ausgestaltung teuer und aufwändig in der Herstellung und auch beim Auftreten hoher Verbindungskräfte kann sich bereits die angesprochene leistenförmige Rast- oder Clipverbindung lösen.

Ausgehend von diesem Stand der Technik liegt der Erfindung die Aufgabe zugrunde, die bekannten Seilverbinder unter Beibehalten ihrer Vorteile, nämlich hohe Verbindungskräfte sicherzustellen, dahingehend weiter zu verbessern, dass jedenfalls die Netzhersteilung weitgehend automatisierbar ist, einfach und kostengünstig zu bewerkstelligen ist, sowie die Länge der Netze beliebig variiert werden kann. Eine dahingehende Aufgabe löst ein Seilverbinders mit den Merkmalen des Patentanspruches 1 in seiner Gesamtheit.

Dadurch, dass gemäß dem kennzeichnenden Teil des Patentanspruches 1 das Grundkörperteil an seinem einen Ende eine Rastausnehmung als das eine Verbindungsmittel aufweist, in die ein zuordenbares Rastteil am gegenüberliegenden Ende als weiteres Verbindungsmittel des Grundkörperteils derart paßgenau einbringbar ist, dass eine in sich geschlossene Festlegehülse oder Pressklemme ausgebildet ist, sobald der klemmenartige Seilverbinder zur Hülse geschlossen ist, ist der erfindungsgemäße Seilverbinder mit nur einem Grundkörperteil realisiert, so dass sich insoweit die erfindungsgemäße Verbindungstechnologie zur Erstellung von Netzanordnungen ausgesprochen kostengünstig realisieren läßt. Der jeweilige Seilverbinder ist an nahezu beliebig vorgebbaren Verbindungsstellen der Netzanordnung an den benachbart zuordenbaren Seilabschnitten festlegbar, wobei der dahingehende Festlegevorgang automatisierbar ist, aber nach wie vor auch von Hand vorgenommen werden kann, insbesondere wenn nur kleine Flächen an Netzanordnungen benötigt werden.

Im Gegensatz zu den im Stand der Technik bekannten offenen oder geschlossenen Preßhülsen- sowie Preßklemmenlösungen oder den Lösungen bestehend aus mehreren Grundkörperteilen, die nach ihrer Verpressung entlang eines Seitenabschnittes nach wie vor offen bleiben bzw. zwei gegenüberliegende Längsnahtverbindungen eingehen, ist der erfindungsgemäße Seilverbinder über das genannte Verbindungsmittel entlang nur einer Längsnaht fixiert, d.h. die einander benachbarten Enden des für den Seilverbinder ausschließlich eingesetzten einzelnen Grundkörperteils bilden eine in sich geschlossene Festlegehülse oder Preßklemme aus, so dass dergestalt nicht nur ein einfacher Montage- und Festlegevorgang erreicht ist, sondern aufgrund der geschlossenen Hülsenanordnung lassen sich dergestalt auch sehr hohe Klemm- und Verbindungskräfte auf die einander benachbart angeordneten Seilabschnitte entlang ihrer einzigen Längsnaht als Verbindungsstelle ausüben.

Ferner besteht die Möglichkeit, die längs einer Trennnaht ineinander greifenden Verhakungsmittel zusätzlich über eine Schweißnaht aneinander zu fixieren. Aufgrund der genannten Verhakungsmittel des einen Grundkörperteils lassen sich jedenfalls dergestalt für den Hülsenseilverbinder nicht nur eine kraftschlüssige, sondern vielmehr auch eine Formschlußverbindung realisieren, was sich günstig auf die Krafteinleitung, ausgehend von den Seilabschnitten, auf den Seilverbinder selbst auswirkt. Sofern das Verbindungsmittel zusätzlich mit der Schweißnaht nachbearbeitet ist, ist neben der formschlüssigen Verbindung auch eine stoffschlüssige Verbindung realisiert.

Vorzugsweise weist das Rastteil mindestens eine Hinterschneidung auf, insbesondere in der Art einer Stufe, eines Trapezes, eines Omegas oder in zinnen- oder s-förmiger Ausbildung. In Abhängigkeit der jeweiligen Befestigungsaufgabe läßt sich dergestalt in einem weiten Bereich die jeweils notwendige Verbindung herstellen.

Im folgenden wird der erfindungsgemäße Seilverbinder anhand der Zeichnung näher erläutert. Dabei zeigen in prinzipieller und nicht maßstäblicher Darstellung die
- Fig. 1: einen Ausschnitt aus einer Netzanordnung bestehend aus einzelnen Seilabschnitten eines Seiles;
- Fig. 2: in perspektivischer Ansicht eine Ausführungsform eines in der Netzanordnung nach der Fig. 1 eingesetzten Seilverbinders;
- Fig. 3a bis f: in Draufsicht verschieden ausgebildete Rastteilformen zum Verbinden der freien Enden des Grundkörperteiles in Entsprechung nach der Ausführungsform Fig. 2, wobei die Fig. 3f eine stirnseitige Ansicht auf den hülsenartigen Seilverbinder nach den Fig. 3a bis 3e betrifft.

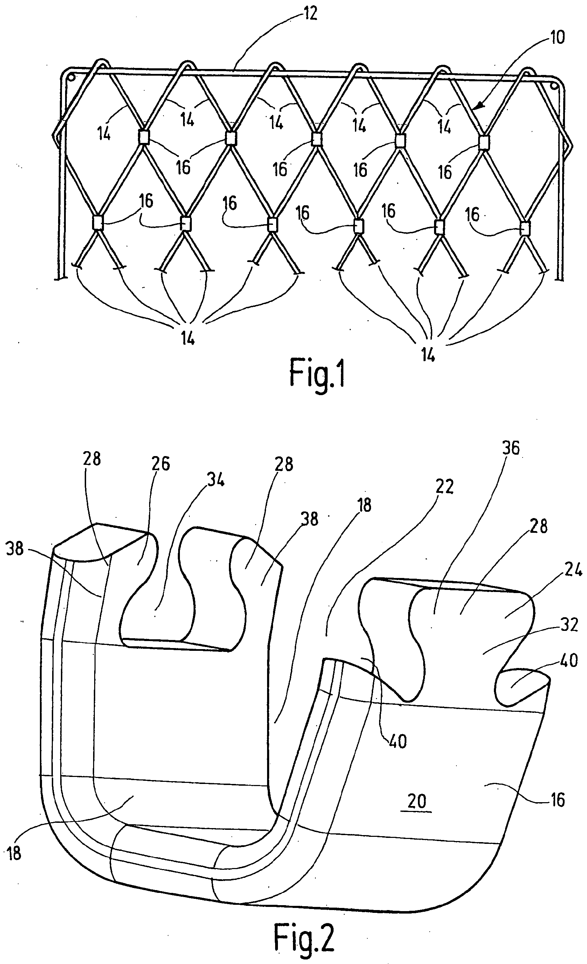

Die Fig. 1 zeigt einen Ausschnitt einer als Ganzes mit 10 bezeichneten flächig ausdehnbaren, flexiblen Netzanordnung. Die dahingehende Netzanordnung 10 ist teilweise um einen Rahmen 12 herumgeschlungen, um dahingehend das Netz zu fixieren. Der dahingehende Rahmen 12 kann Bestandteil eines Möbelstückes sein oder eines Bauwerkes. Insbesondere lassen sich Seilnetzanordnungen nach der Fig. 1 als Geländerfüllung verwenden, als Absturzsicherung bei Gebäuden, als Schutznetze, für Fassadenbegrünung, Zoo- und Messearchitektur oder ganz allgemein im Design- und Möbelbereich, sowie für Netze im technischen Bereich.

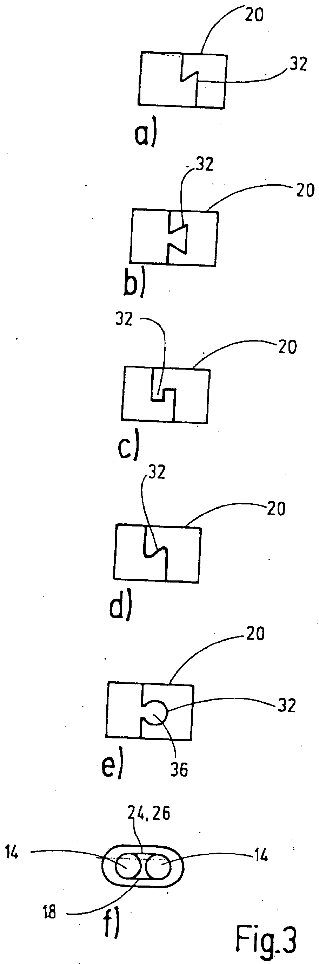

Das in der Fig. 1 gezeigte Netz ist aus einzelnen Seilabschnitten 14 mindestens eines Seils gebildet, wobei benachbarte, nicht überkreuzende Seilabschnitte 14 sich unter Bildung von knotenartigen Verbindungsstellen mittels des Seilverbinders aneinander festlegen lassen. Der jeweilige Seilverbinder bildet dabei ein hülsenartiges Verbindungsteil 16 aus, an dessen beiden einander gegenüberliegenden Stirnseiten 18 (vgl. Fig. 2 und 3f) die zu verbindenden Paare an Seilabschnitten 14 ein- und austreten. Das jeweilige Verbindungsteil 16 besteht im Ausgangszustand vor der Montage wie es in der Fig. 1 dargestellt ist, aus einem Grundkörperteil 20 (vgl. Fig. 2), das zum Einlegen der miteinander verbindbaren Seilabschnitte 14 eine seitliche Einlegeöffnung 22 aufweist. An den beiden einander gegenüberliegenden Enden 24, 26 ist für das Grundkörperteil 20 mindestens ein Verbindungsmittel 28 vorgesehen und im festgelegten Montagezustand sind die benachbart gegenüberliegenden Verbindungsmittel 28 eines Grundkörperteils 20 miteinander in Verbindung.

Das jeweilige Verbindungsmittel 28 ist aus einem Verhakungsmittel 32 gebildet, wobei das Grundkörperteil 20 an seinen beiden einander gegenüberliegenden Enden 24, 26 das dahingehende Verhakungsmittel 32 aufweist. Das Grundkörperteil 20 kann aus einem flachen oder gebogenem Band gebildet sein, vorzugsweise aus einem Stahl- oder Edelstahlblech; kann aber in Abhängigkeit der aufzunehmenden Kräfte auch aus einem anderen Material, insbesondere Kunststoffmaterial bestehen.

Wie insbesondere die Fig. 2 zeigt, weist das jeweilige Grundkörperteil 20 an seinem einen Ende 26 eine Rastausnehmung 34 auf, in die ein zuordenbares Rastteil 36 paßgenau einbringbar ist, sobald der klemmenartige Seilverbinder zur Hülse geschlossen wird. Hierbei können in einem ersten Verfahrensschritt das Rastteil 36 in Eingriff gebracht werden mit der zuordenbaren Rastausnehmung 34 und in einem weiteren Verfahrensschritt wird dann der dahingehende Verbund auf die in die seitliche Öffnung 22 eingebrachten beiden benachbarten Seilabschnitte 14 verpresst, so dass dergestalt eine sowohl kraft- als auch formschlüssige Klemmverbindung entsteht.

Bei der Rastausgestaltung nach der Fig. 2 ist die T-förmige Rastausnehmung 34 von zwei seitlichen Rastschenkeln 38 begrenzt, die in zugeordnete Ausnehmungen 40 am anderen Ende 24 mit dem Rastteil 36 eingreifen, wobei insoweit das Rastteil 36 für den Eingriff in die Rastausnehmung 34 gleichfalls T-förmig ausgebildet ist und die beiden Ausnehmungen 40 flankieren beidseitig das dahingehende Rastteil 36. Durch die Verjüngung der Rastschenkel 38 zu ihrem freien Ende hin blockieren die beiden Ausnehmungen 40 eine ungewollte Lösebewegung, so dass dergestalt ein zangenartiger Klemmgriff für das eigentliche Rastteil 36 erreicht ist.

An Stelle der in der Fig. 2 gezeigten T-Verbindungslösung mit konkav und konvex strukturierten Anlageflächen ist das Verhakungsmittel 32 nach der Fig. 3a stufenartig ausgebildet und nach der Fig. 3b trapezartig. Die Fig. 3c und 3d zeigen zinnen- bzw. s-förmig ausgebildete Verhakungsmittel 32 und bei der Lösung nach der Fig. 3e ist das dahingehende Verhakungsmittel 32 mit einem omegaförmigen Rastteil 36 realisiert. Die in den Figuren dargestellte Verhakungsmittel-Lösung kann längs den beiden Enden 24, 26 in mehrfacher Hintereinanderanordnung mehrere Rastteile (nicht dargestellt) aufweisen. Den in den Fig. 3a bis 3e beispielhaft dargestellten Verhakungsmittellösungen ist allen ein Hinterschnitt gemeinsam, welcher einen zangenartigen Klemmgriff zur Folge hat, welcher zu einer deutlichen Festigkeitssteigerung in Querrichtung gegenüber den auf dem Markt befindlichen offenen Klemmen zur Folge hat; also eine Festigkeitssteigerung in Richtung quer zum Ein- und Austritt der Seilabschnitte in den erfindungsgemäßen Seilverbinder.

Mit der erfindungsgemäßen Seilverbinderlösung ist im Vormontagezustand eine Art offene Klemme realisiert, die zum paarweise Fixieren von Seilabschnitten oder Seilen benutzt werden kann, und die im Gegensatz zu den herkömmlich bekannten Klemmen sich dadurch auszeichnet, dass durch eine spezielle Formgebung beim Fixieren der Klemme auf den zuordenbaren Seilabschnitten neben dem Kraftschluß auch ein Formschluß oder ein Stoffschluß oder eine Kombination von Stoffschluß und Formschluß erreicht wird, der der Klemmverbindung eine zusätzliche Festigkeit in Seilquerrichtung verleiht, so dass insoweit die Festigkeitswerte einer geschlossenen Klemme erreichbar sind.

## Patentansprüche

1. Seilverbinder zur Verbindung von einander nicht überkreuzenden Seilabschnitten (14) mindestens eines Seils, insbesondere zur Bildung von Verbindungsstellen einer flächig ausdehnbaren, flexiblen Netzanordnung (10) mit an Verbindungsstellen miteinander verbundenen Seilabschnitten (14), die mittels im festgelegten Montagezustand seitlich geschlossenen, hülsenartigen Verbindungsteilen (16) miteinander verbindbar sind, wobei das jeweilige Verbindungsteil (16) im Ausgangszustand vor Montage und im festgelegten Montagezustand aus einem Grundkörperteil (20) besteht, das zum Einlegen der miteinander verbindbaren Seilabschnitten (14) eine seitliche Einlegeöffnung (22) aufweist, **dadurch gekennzeichnet, dass** das Grundkörperteil (20) an seinem einen Ende (26) eine Rastausnehmung (34) als das eine Verbindungsmittel aufweist, in die ein zuordenbares Rastteil (36) am gegenüberliegenden Ende (26) als weiteres Verbindungsmittel des Grundkörperteils (20) derart paßgenau einbringbar ist, dass eine in sich geschlossene Festlegehülse oder Preßklemme ausgebildet ist, sobald der klemmenartige Seilverbinder zur Hülse geschlossen ist.

2. Seilverbinder nach Anspruch 1, **dadurch gekennzeichnet, dass** das Grundkörperteil (20) im Ausgangszustand vor Montage ein flaches ebenes oder gebogenes Band bildet.

3. Seilverbinder nach Anspruch 1 oder 2, **dadurch gekennzeichnet, dass** das Rastteil (36) mindestens eine Hinterschneidung aufweist, insbesondere in der Art einer Stufe (Fig. 3a), eines Trapezes (Fig. 3b), eines Omegas (Fig. 3e), zinnen- (Fig. 3c) oder s-förmig (Fig. 3d) ausgebildet ist.

## Claims

1. A cable connector for connecting cable sections (14) of at least one cable that do not cross one another, in particular for forming connection points of a two-dimensionally extendable, flexible net arrangement (10) with cable sections (14) connected to one another at connection points and which can be connected to one another by sleeve-like connectors (16) that are closed at the side in the fixed fitted state, the respective connector (16) in the initial state prior to fitting and in the fixed fitted state consisting of a base body part (20) which has a side insertion opening (22) for inserting the cable sections (14) that can be connected to one another, **characterised in that** the base body part (20) has at its one end (26) a detent recess (34) as the one connection means into which an assignable locking part (36) can be introduced, with precise fit, as another connection means of the base body part (20) at the opposite end (26) such that a closed fixing sleeve or ferrule is formed as soon as the clamp-like cable connector to the sleeve is closed.

2. The cable connector according to Claim 1, **characterised in that** in the initial state prior to fitting the base body part (20) forms a two-dimensionally planar or bent strip.

3. The cable connector according to Claim 1 or 2, **characterised in that** the locking part (36) has at least one undercut, in particular in the manner of a step (Fig. 3a), a trapezoid (Fig. 3b), an omega (Fig. 3e) or in a crenellated (Fig. 3c) or s-shaped (Fig. 3d) design.

## Revendications

1. Dispositif de jonction de câble pour joindre des tronçons (14), ne se croisant pas l'un l'autre, d'au moins un câble, notamment pour former des points de jonction d'un agencement (10) de grillage souple et extensible en nappe, comprenant des tronçons (14) de câble, qui sont reliés entre eux en des point de liaison et qui sont reliés entre eux au moyen de parties (16) de liaison de type en douille fermées latéralement en l'état de montage fixé, la partie (16) de liaison respective étant constituée, dans l'état initial avant le montage et à l'état de montage fixé, d'une partie (20) de corps de base qui a, pour l'insertion des tronçons (14) de câbles pouvant être joints l'un à l'autre, une ouverture(22) latérale d'insertion, **caractérisé en ce que** la partie (20) de corps de base a, à l'une de ses extrémités (26), un évidemment (34) d'encliquetage comme moyen de liaison, dans lequel une partie (36) d'encliquetage, conjuguée à l'extrémité (26) opposée, peut être introduite avec exactitude comme autre moyen de liaison de la partie (20) de corps de base de manière à former une douille de fixation fermée ou une pince de serrage dès que le dispositif de jonction de câble du type à pince est fermé en une douille.

2. Dispositif de jonction de câble suivant la revendication 1, **caractérisé en ce que** la partie (20) de corps de base forme, à l'état initial avant le montage, un plan plat ou une bande incurvée.

3. Dispositif de jonction de câble suivant la revendication 1 ou 2, **caractérisé en ce que** la partie (36) d'encliquetage a au moins une contre-dépouille, notamment à la manière d'un palier (Fig. 3a), d'un trapèze (Fig. 3b), d'un oméga (Fig. 3e), d'une forme en dent (Fig. 3c) ou d'une forme en S (Fig. 3d).
